# EUROPÄISCHE PATENTANMELDUNG

(11) **EP 0 693 346 A1**
(43) Veröffentlichungstag der Anmeldung: **24.01.1996**
(21) Anmeldenummer: 95109822.7
(22) Anmeldetag: 23.06.1995
(51) Int. Cl.: B24B 33/055, B29C 47/12, B26D 7/12

(54) **Verfahren, Vorrichtung und Anlage zum Nachplanen einer Fläche einer Lochplatte eines Extruders im eingebauten Zustand**

(30) Priorität: 24.06.1994 DE 4422200
(71) Anmelder: ÖMV Deutschland GmbH, D-80078 München (DE)
(72) Erfinder: Straubinger, Alois, D-84533 Haiming (DE); Hennersberger, Herbert, D-84359 Simbach (DE)
(74) Vertreter: VOSSIUS & PARTNER

(57) **Zusammenfassung**

Die Erfindung betrifft ein Verfahren, eine Vorrichtung und eine Anlage zum Nachplanen einer Fläche einer Lochplatte eines Extruders, insbesondere für die Granulierung von Kunststoffen, wie PP oder PE, im eingebauten Zustand. Vorzugsweise wird die Platte (1) auf eine Temperatur im Bereich von etwa 80°C bis etwa 150°C erwärmt. Dabei wird eine mechanische und eine thermische Verspannung der Lochplatte (1) und einer Fläche (3) an der Lochplatte (1) nach dem Nacharbeiten im Betrieb stark verringert. Weiter bevorzugt wird die Fläche (3) von einer Honeinrichtung (10) nachgeplant. Dabei wird in einer Ausführungsform eine Drehbewegung über ein Ritzelrad (29) auf einen Honkopf (11) der Honeinrichtung (10) übertragen. Eine rotierende Oszillierbewegung, eine Ausrichtung und auch eine Zentrierung der Honeinrichtung (10) wird dadurch erreicht, daß eine Exzentereinrichtung (18), auf der der Honkopf (11) exzentrisch drehbar gelagert ist, auf eine Antriebswelle (52) einer Antriebseinrichtung (50) gesetzt wird, die normalerweise Messer für das Abschneiden des zu granulierenden aus der Fläche (3) austretenden Materials antreibt.

## Beschreibung

Die vorliegende Erfindung betrifft ein Verfahren, eine Vorrichtung und eine Anlage zum Nachplanen einer Fläche einer Lochplatte eines Extruders, insbesondere für die Granulierung von Kunststoffen, wie PP oder PE.

Es sind Extruder zum Herstellen eines PP- oder PE-Granulats bekannt. Dabei wird ein aus Pulver und Flüssigkeit bestehendes Ausgangsmaterial geknetet. Anschließend wird dieses teigige Material mit einem Druck von etwa 100 bar durch eine Lochplatte mit beispielsweise etwa 1200 Bohrungen bzw. Düsen mit einem Durchmesser von 2,6 mm gepreßt. Nach dem Austreten des teigigen Materials aus den Bohrungen wird dieses von Messern, beispielsweise etwa 16 Stück pro einem Messerflügel, hinter einer Fläche am Ende der Bohrungen zerteilt. Die so zerteilten Abschnitte des teigigen Materials werden sodann in einem Wasserstrom abgekühlt und erhärtet und bilden so das herzustellende Granulat, das zur Weiterverarbeitung zu Fertigprodukten z.B. in 50 kg-Säcken Endherstellern geliefert wird.

Um einen sauberen Schnitt zu erreichen, werden die Messer gegen die ihnen zugewandte Fläche der Lochplatte mit einer Kraft von etwa 2000 bis etwa 4000 N gedrückt. Dadurch entsteht eine große Reibung zwischen den Messern und der Lochplatte, was zusammen mit einer relativ großen Korrosion dazu führt, daß die den Messern zugewandte Fläche der Lochplatte trotz des hochfesten Materials der Lochplatte und der Messer ("Ferrotitanit" bzw. "NICRO 128") abgetragen wird und damit die Austrittsöffnung der Bohrungen abgerundet werden. Um derartige, durch eine verschlissene Lochplatte bedingte Granulierprobleme zu vermeiden, muß die gesamte Lochplatte gegen eine vom Hersteller instandgesetzte (überschliffene) Lochplatte gewechselt werden. Dies geschieht mehrmals jährlich (etwa 3 bis 4 mal), wobei der Extruder jeweils etwa 20 Stunden stillzulegen ist. Dies hat den Nachteil, daß eine Vielzahl von Schrauben (56 Stück M24) heraus- und wieder hineinzudrehen sind und eine überschliffene Platte vom Hersteller bereitgehalten werden muß.

Die DE-OS-42 27 315 betrifft eine Vorrichtung zur Oberflächenbearbeitung von Werkstücken, die eine gleichzeitige Bearbeitung der Werkstückoberflächen ohne die Notwendigkeit eines Austauschs von Bearbeitungswerkzeugen ermöglicht. Die Bearbeitungswerkzeuge werden dabei lösbar an einem Gehäuse angeordnet.

Die DE-PS-38 40 595 betrifft eine Schleifmaschine mit linear oszillierend bewegtem Werkzeugträgerschlitten, der den Werkzeugträger mit mindestens einem Schleifwerkzeug aufnimmt. Ein Kurbeltrieb ist mit einem Exzenterelement ausgebildet, das einen Werkzeugträgerschlitten linear oszilliert.

Es ist die Aufgabe der Erfindung, ein Verfahren, eine Vorrichtung und eine Anlage zum Nachplanen einer Fläche einer Lochplatte eines Extruders bereitzustellen, wobei ein Extruder nur eine kurze Zeit stillgelegt werden soll und eine möglichst hohe Planmaßhaltigkeit der nachgeplanten Fläche der Lochplatte gewährleistet wird.

Diese Aufgabe wird mit einem Verfahren, einer Vorrichtung und einer Anlage mit den Merkmalen der Ansprüche 1, 9 bzw. 14 gelöst. Die abhängigen Ansprüche sind auf bevorzugte Ausführungsformen der Erfindung gerichtet.

Der Erfindung liegt der Gedanke zugrunde, eine Fläche einer Lochplatte nachzuplanen, wenn sich die Lochplatte im eingebauten Zustand am Extruder befindet. Damit werden die mechanischen Verspannungen vermieden, die durch das An- und Abschrauben auftreten können. Außerdem wird ein eventuell durch ein unterschiedliches Anbringen der Lochplatte am Extruder entstehender Versatz vermieden.

Außerdem haben die Erfinder gefunden, daß sich beim bekannten Verfahren die neue Lochplatte beim Anbringen an den Extruder verzieht, so daß die den Messern zugewandte Fläche Oberflächenverwerfungen bildet. Außerdem verzieht sich die bei einer Temperatur von etwa 20°C bis etwa 25°C vom Hersteller geschliffene neue Lochplatte zusätzlich aufgrund thermischer Spannungen, da sie im Betrieb eine wesentlich höhere Temperatur im Bereich von etwa 190°C bis etwa 230°C erreicht.

Bevorzugt wird daher die Lochplatte bei dem Nachplanen auf eine erhöhte Temperatur im Bereich von etwa 80°C bis etwa zur Betriebstemperatur (ca. 230°C), weiter bevorzugt bis zur Fließtemperatur des zu verarbeitenden Kunststoffs, auf z.B. etwa 120°C bis etwa 130°C, erwärmt, um ein thermisches Verziehen der Lochplatte im Betrieb zu kompensieren.

Weiter bevorzugt wird die Fläche der Lochplatte mit den Bohrungen gehont. Zum Ausrichten und Zentrieren der Honeinrichtung und zum Aufbringen einer Oszillierbewegung wird diese auf eine Antriebswelle einer Antriebseinrichtung für die Messer angebracht. Dabei wird ein Honkopf durch einen äußeren Antriebsmotor und ein damit verbundenes Ritzelrad rotiert. Auf der Antriebswelle der Antriebseinrichtung der Messer ist verdrehfest eine Exzentereinrichtung angebracht, auf der der Honkopf der Honeinrichtung exzentrisch drehbar gelagert ist. Wenn die Exzentereinrichtung durch die Rotation der Antriebswelle mit einer unterschiedlichen Drehzahl zu dem Honkopf gedreht wird, findet eine drehende Oszillationsbewegung des Honkopfes statt, um kreisförmige Riefen auf der nachzuplanenden Fläche zu vermeiden.

Bei Testläufen der vorliegenden Erfindung wurde ein sehr gutes Planmaß von 6/100 mm bis 8/100 mm und eine Planschlaggenauigkeit von 1/100 mm bis 2/100 mm erreicht. Damit wird eine schlechte Granulierung verhindert.

Die Aufgaben, Vorteile und Merkmale der Erfindung werden nachstehend anhand von Beispielen und mit Bezug auf die Zeichnung näher erläutert. Es zeigen:
- Fig. 1A: einen Schnitt einer Lochplatte und einer Ausführungsform der erfindungsgemäßen Honeinrichtung und eine angedeutete Antriebseinrichtung für Messer,
- Fig. 1B: einen Schnitt einer Lochplatte und einer zweiten Ausführungsform der erfindungsgemäßen Honeinrichtung und eine angedeutete Antriebseinrichtung für Messer,
- Fig. 2: ein bevorzugtes Ausführungsbeispiel eines Teils einer Bearbeitungsfläche eines bevorzugten Honkopfes einer erfindungsgemäßen Honeinrichtung und
- Fig. 3: ein Schema einer erfindungsgemäßen Anlage.

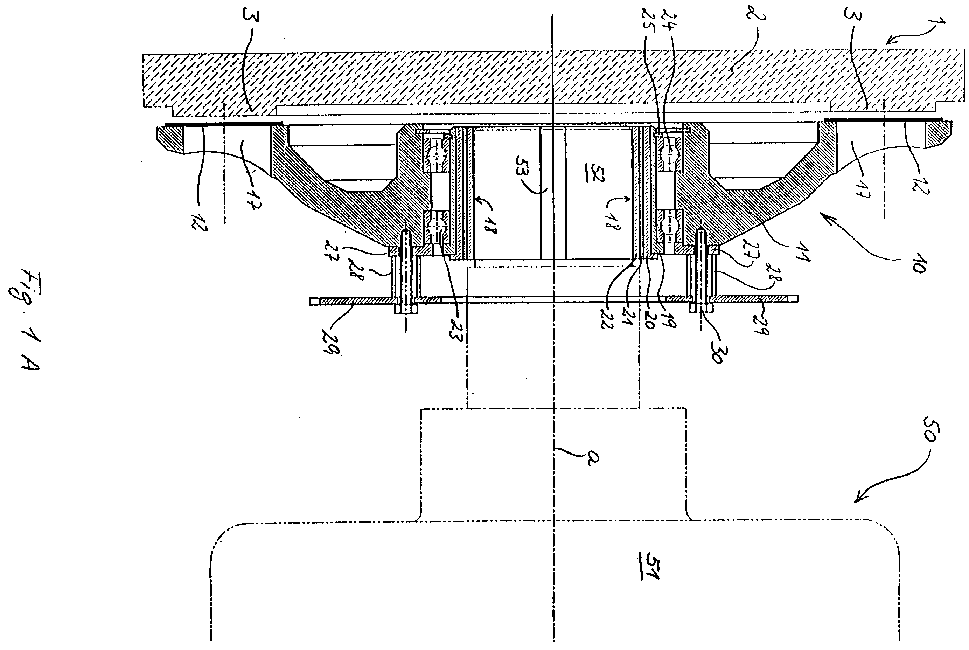

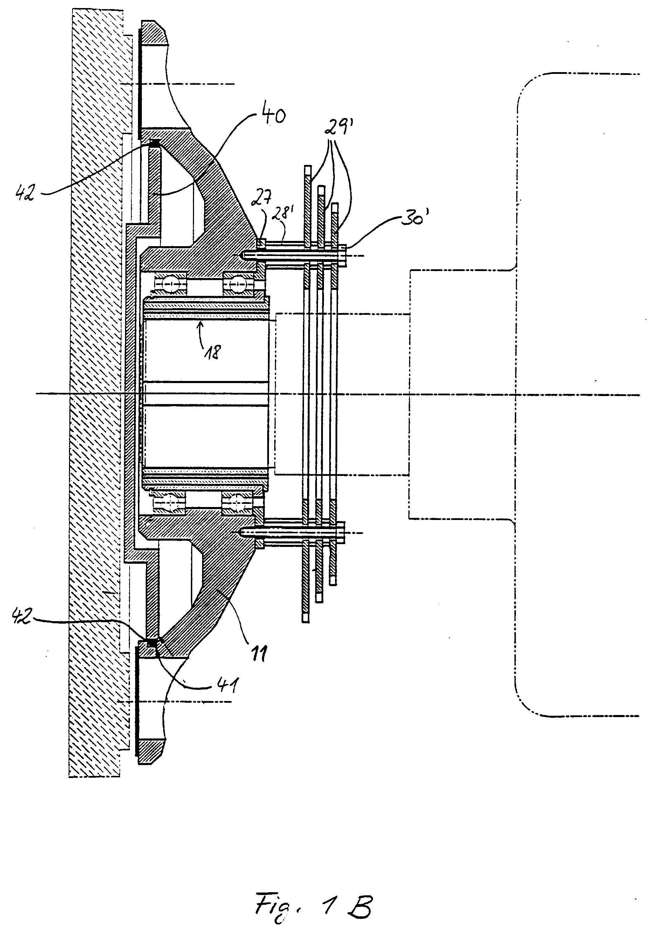

Fig. 1A deutet im Schnitt eine Lochplatte 1 mit einem Körper 2 an. Eine Fläche 3 der Lochplatte 1 ist gegenüber dem Körper 2 auf der im Normalbetrieb den Messern zugewandten Seite erhaben ausgebildet. In diesem Bereich erstrecken sich zahlreiche Bohrungen (nicht dargestellt) in der Lochplatte durch den Körper 2 zur Fläche 3. Gegen die Fläche 3 werden im Normalbetrieb die nicht dargestellten Messer gedrückt.

Eine bevorzugte Ausführungsform einer erfindungsgemäßen Honeinrichtung 10 weist einen Honkopf 11 auf. Auf der der nachzuarbeitenden bzw. nachzuplanenden Fläche 3 der Lochplatte 1 gegenüberliegenden Seite des Honkopfes 11 ist mindestens ein Honstein 12 fest an dem Honkopf 11 angeordnet.

Mit einer nicht durchgezogenen Linie ist die Antriebseinrichtung 50 für die Messer angedeutet. Diese Antriebseinrichtung 50 weist einen Antriebsmotor 51 und eine sich daraus zur Lochplatte 1 hin erstreckende Antriebswelle 52 auf. Auf das freie Ende der Antriebswelle 52, auf dem sich im Normalbetrieb die Messer befinden, ist eine Exzentereinrichtung 18 geschoben und mit der Antriebswelle 52 über eine Feder 53 verdrehfest verbunden.

Die Exzentereinrichtung 18 kann mehrere Bauteile 19 bis 22 aufweisen. Dabei befindet sich eine im Schnitt in Fig. 1A gleich stark dargestellte, in einer außerhalb der Schnittebene jedoch exzentrische Exzenterbuchse 19 auf einer ersten Stahlbuchse 20. Eine zweite Stahlbuchse 22 ist direkt auf die Antriebswelle 52 geschoben. Eine zwischen der ersten Stahlbuchse 20 und der zweiten Stahlbuchse 22 angeordnete Gummibuchse 21 kann Unebenheiten z.B. auf der Antriebswelle 52 ausgleichen.

Auf der Exzenterbuchse 19 ist der Honkopf 11 z.B. über Kugellager 23, 24 drehbar gelagert. Wegen der Exzenterbuchse 19 dreht sich also der Honkopf 11 exzentrisch zu der Antriebswelle 52 und zu deren Achse a. Die Kugellager 23, 24 können sich auf dafür vorgesehenen Ansätzen am Honkopf 11, an der Exzenterbuchse 19, an einem Stützring 27 und an einem Sicherungsring 25 in der Exzenterbuchse 19 abstützen. Zentrisch zum Honkopf 11 ist z.B. über Abstandshalter 28 und Ritzelschrauben 30 ein Ritzelrad 29 mit dem Honkopf 11 verbunden. Es kann jedoch auch direkt mit dem Honkopf 11 verschraubt sein.

Bei den Kugellagern 23, 24 handelt es sich um abgedichtete Lager, damit kein Honöl eindringt. Fig. 1B zeigt insbesondere eine zweite Ausführungsform einer erfindungsgemäßen Honeinrichtung. Dabei kann alternativ auch eine sich über die innere Bohrung des Honkopfes 11 erstreckende Abdeckung 40 am Honkopf 11 oder auch an der Exzentereinrichtung 18 angebracht sein. Damit kann zudem Wärme von den Kugellagern 23, 24 abgeschirmt werden. Bei der dargestellten Ausführungsform ist im Honkopf 11 an einer geeigneten Stelle eine Nut 41, wie z.B. eine Ringnut, ausgebildet. In diese Ringnut kann ein Dichtungsring 42, wie z.B. ein O-Ring, eingelegt werden, um den Honkopf 11 und die Abdeckung 40 abzudichten.

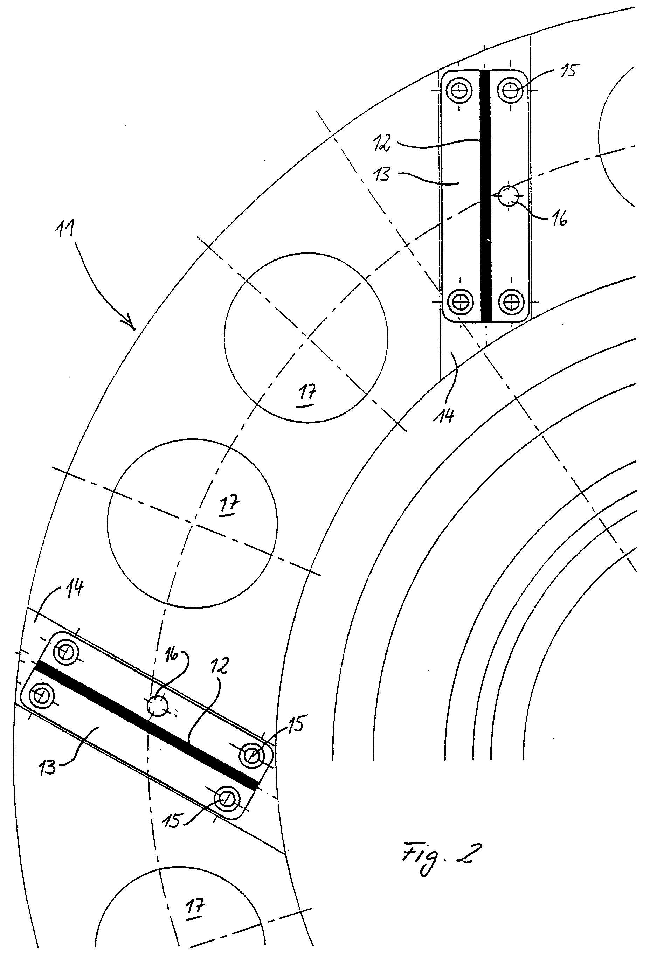

Fig. 2 zeigt die Arbeitsfläche des Honkopfes 11. Dabei sind außen am Honkopf 11 die leistenförmigen Honsteine 12 lösbar angebracht. Die Honsteine 12 sind in einem Honsteinhalter 13 angeordnet, der über Schrauben 15 an dem Honkopf 11 befestigt und über einen Stift 16 zu diesem positioniert ist. Vorzugsweise ist zum Anbringen der Honsteinhalter 13 im Honkopf 11 jeweils eine Nut 14 ausgebildet.

Vorzugsweise sind die Honsteine 12 derartig geneigt, daß, wenn der Honkopf 11 gedreht wird (in Fig. 2 nach rechts), der Abrieb und das Honöl nach innen zum Honkopf 11 transportiert wird. Damit wird ein Wegspritzen des Honöls und des Abriebs verhindert.

Ferner können sich vorzugsweise neben den Honleisten 12 Zuführbohrungen öffnen, aus denen Honöl zum Kühlen der Honleisten 12 und zum Abführen des Abriebs und/oder zum Erwärmen der nachzuplanenden Fläche 3 unter Druck ausströmt.

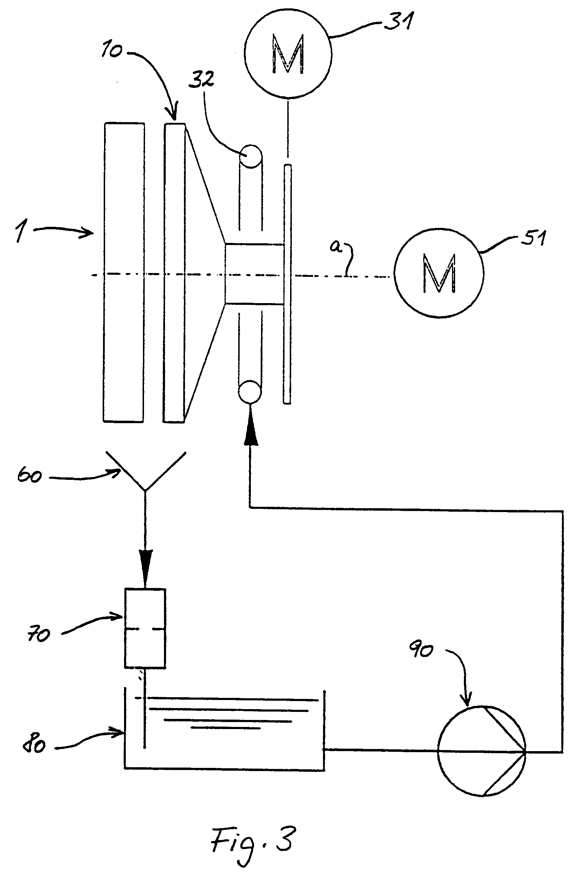

Fig. 3 zeigt, daß das Honöl einem Verteilerrohr 32 an der Honeinrichtung 10 zugeführt wird. Es gelangt dann über entsprechende Radial- und Axialbohrungen an die in Fig. 2 dargestellten Zuführbohrungen 17. Außerdem zeigt Fig. 3 eine Auffangeinrichtung 60, wie einen Auffangtrichter, der verbrauchtes Honöl unter der Honeinrichtung 10 und der Lochplatte 1 sammelt. In einer Abscheideeinrichtung 70, wie z.B. u.a. einem Magnetabscheider, werden dann Fremdstoffe, wie der Abrieb, vom Honöl getrennt. Das Honöl wird sodann in einen Honölbehälter 80 geleitet, von dem aus eine Pumpe 90 das Honöl dem Verteilerrohr 32 zuführt.

Ein äußerer Antriebsmotor 31 treibt über geeignete Mittel das Ritzelrad 29 am Honkopf 11 an.

Vorzugsweise wird das erfindungsgemäße bevorzugte Honverfahren wie folgt durchgeführt: Der Antriebsmotor 31 überträgt auf das Ritzelrad 29 die erforderliche Rotationsbewegung zum Honen auf den Honkopf 11. Bei Honleisten mit der Kennzeichnung "D 76" (relativ fein) bzw. "D 155" (relativ rauh) werden vorzugsweise Schnittgeschwindigkeiten von etwa 18 bis 45 m/min, besonders bevorzugt von 18 bis 29 m/min, gefahren. Bei den üblichen Abmessungen der Lochplatte werden diese Schnittgeschwindigkeiten bei etwa 10 bis maximal 30 Umdrehungen pro Minute erreicht, wobei sich der Antriebsmotor 51 etwa mit 100 bis 300 min⁻¹ dreht. Dabei wird anfänglich der Honkopf mit relativ rauhen Honleisten mit geringen Geschwindigkeiten betrieben. Daraufhin werden die rauhen Honleisten durch feinere ersetzt und der Honkopf wird mit einer höheren Schnittgeschwindigkeit betrieben.

Um eine weitere Abstufung der Schnittgeschwindigkeiten zu ermöglichen, können, wie in der in Fig. 1B dargestellten Ausführungsform, mehrere Ritzelräder 29', vorzugsweise drei, mit unterschiedlichen Durchmessern z.B. direkt oder über einen Stützring 27, einen Abstandhalter 28' und eine Ritzelschraube 30' am Honkopf 11 befestigt sein.

Bei seiner Rotation dreht sich der Honkopf 11 gemäß Fig. 1A exzentrisch zur Drehachse a der Antriebswelle 52, bedingt durch die Exzentereinrichtung 18. Um eine rotierende Oszillierbewegung zu erzielen, wird dabei die Exzentereinrichtung 18 von dem Antriebsmotor, der im Normalbetrieb die Messer antreibt, über die Antriebswelle 52 gedreht. Um die dabei auftretenden Schwingungen gering und die Honbewegungen möglichst fein zu machen, wird dabei die Exzentereinrichtung 18 schneller als der Honkopf 11 gedreht.

In einem Beispiel wird das Honverfahren folgendermaßen durchgeführt:
Die Drehzahl des Antriebsmotors 31 beträgt 144 min⁻¹, wobei ein damit verbundenes Ritzel 12 Zähne aufweist. Die Drehzahl des Antriebsmotors beträgt 250 min⁻¹. Die Drehzahl des Honkopfes bei einem ersten Ritzelrad 29' mit 149 Zähnen beträgt 11,6 min⁻¹, bei einem zweiten Ritzelrad 29' mit 124 Zähnen 13,9 min⁻¹ und bei einem dritten Ritzelrad mit 98 Zähnen 17,6 min⁻¹. Die Exzenterbuchse 19 weist eine Exzentrizität von 1 mm auf und erreicht eine Radialgeschwindigkeit von 0,5 m/min. Die Umfangsgeschwindigkeit beim Honen bei einem mittleren Durchmesser des Honkopfes von 515 mm beträgt beim ersten Ritzelrad 29' beim Vorhonen 18,75 m/min, beim zweiten Ritzelrad 29' beim Vorhonen 22,48 m/min und beim dritten Ritzelrad 29' beim Fertighonen 28,46 m/min. Der Honkopf wird mit 1300 N an die Lochplatte 1 angedrückt, was etwa einem Anpreßdruck von 70 N/cm² an den Honflächen ergibt.

Weiter bevorzugt wird bei dem erfindungsgemäßen Verfahren vor dem Honen die zu bearbeitende Fläche auf eine Temperatur von etwa 80°C abgekühlt. Bei dieser Temperatur verfestigt sich der verarbeitete Kunststoff in der Lochplatte 1 und auf der Fläche 3, so daß er sich leicht z.B. durch Schaben entfernen läßt. Die Temperatur wird für die Honbearbeitung wieder soweit erhöht, daß der Kunststoff noch nicht zu fließen beginnt.

## Patentansprüche

1. Verfahren zum Nachplanen einer Fläche (3) einer Lochplatte (1) eines Extruders insbesondere für die Granulierung von Kunststoffen, wie PP oder PE, mit einer Planvorrichtung (10) mit folgenden Verfahrensschritten:
a) Freilegen der nachzuplanenden Fläche (3) der Lochplatte (1), wobei die Lochplatte (1) am Extruder verbleibt,
b) Anordnen der Planvorrichtung (10) an die nachzuplanende Fäche (3) derart, daß die Fläche (3) von der Planvorrichtung mit einer gewünschten Geometrie nachgeplant wird, und
c) Nachplanen der Fläche (3).

2. Verfahren nach Anspruch 1, dadurch gekennzeichnet, daß im Schritt b) die Planvorrichtung (10) auf einer Antriebswelle (52) einer Antriebseinrichtung (50) einer Schneideinrichtung, wie eines Messersterns, angeordnet wird.

3. Verfahren nach Anspruch 1 oder 2, dadurch gekennzeichnet, daß die Lochplatte (1) zum Nachplanen im Schritt c) auf eine erhöhte Temperatur bis zur Betriebstemperatur der Lochplatte erwärmt wird.

4. Verfahren nach einem der vorstehenden Ansprüche, dadurch gekennzeichnet, daß die Lochplatte (1) zum Nachplanen im Schritt c) auf eine Temperatur bis zur Fließtemperatur des im Extruder zu verarbeitenden Stoffs, z.B. 80°C - 130°C, erwärmt wird.

5. Verfahren nach einem der vorstehenden Ansprüche, dadurch gekennzeichnet, daß die Lochplatte (1) vor dem Nachplanen im Schritt c) zum Reinigen auf eine Temperatur von vorzugsweise etwa 80°C abgekühlt wird.

6. Verfahren nach einem der vorstehenden Ansprüche, dadurch gekennzeichnet, daß das Nachplanen im Schritt c) durch Schleifen und/oder Honen durchgeführt wird.

7. Verfahren nach einem der vorstehenden Ansprüche, dadurch gekennzeichnet, daß das Nachplanen im Schritt c) durch Honen mit einer Honeinrichtung (10) durchgeführt wird.

8. Verfahren nach Anspruch 7, dadurch gekennzeichnet, daß das Honen in mehreren Schritten durchgeführt wird, wobei zuerst ein Honen mit einem relativ rauhen Honstein (12) bei einer niedrigen Schnittgeschwindigkeit und dann ein Honen mit einem feineren Honstein (12) bei einer höheren Schnittgeschwindigkeit erfolgt.

9. Verfahren nach Anspruch 7 oder 8, dadurch gekennzeichnet, daß die Honbewegung im Schritt c) durch zwei Rotationen erreicht wird, wobei ein Rotieren eines Honkopfes (11) der Honeinrichtung (10) über ein Rotieren eines äußeren Antriebsmotors (31) und mindestens eines damit verbundenen Ritzelrades (29, 29') am Honkopf (11) erfolgt und ein Oszillieren über ein Rotieren der Antriebseinrichtung (50), der Antriebswelle (52), einer mit der Antriebswelle verdrehfest verbundenen Exzentereinrichtung (18) und dem darauf exzentrisch drehgelagerten und mit unterschiedlicher Drehzahl rotierenden Honkopf (11) erfolgt.

10. Vorrichtung zum Nachplanen einer Fläche (3) einer Lochplatte (1) eines Extruders insbesondere für die Granulierung von Kunststoffen, wie PP oder PE, insbesondere für ein Verfahren nach einem der Ansprüche 6 bis 8, mit:
a) einem rotierbaren Werkzeugkopf (11),
b) einem am Werkzeugkopf (11) angeordneten Werkzeug (12) und
c) einer Aufnahme (18) für eine Antriebswelle (52) einer Antriebseinrichtung (50) einer Schneideinrichtung, wie eines Messersterns.

11. Vorrichtung nach Anspruch 10, dadurch gekennzeichnet, daß der Werkzeugkopf (11) ein Honkopf (11) und das Werkzeug (12) mindestens ein lösbar am Honkopf (11) befestigbarer Honstein (12) ist.

12. Vorrichtung nach Anspruch 11, dadurch gekennzeichnet, daß Honöl zum Wegspülen des Abriebs und Kühlen des Honsteins (12) und/oder Heizen der Lochplatte (1) über ein Verteilerrohr (32) am Honkopf (11) durch den Honkopf (11) über radiale und/oder axiale Zuführbohrungen (17) zur nachzuplanenden Fläche (3) führbar ist.

13. Vorrichtung nach Anspruch 11 oder 12, dadurch gekennzeichnet, daß der Honstein (12) am Honkopf (11) derart geneigt ist, daß bei einer Rotation des Honkopfes (11) im Betrieb Honöl und/oder Abrieb zur Mitte des Honkopfes (11) befördert wird.

14. Vorrichtung nach einem der Ansprüche 11 bis 13, gekennzeichnet durch mindestens ein Ritzelrad (29, 29') am Honkopf (11), das eine Rotation von einem äußeren Antriebsmotor (31) auf den Honkopf (11) überträgt, und eine die Aufnahme (18) bildende Exzentereinrichtung (18), die verdrehfest auf die Antriebswelle (52) aufbringbar ist und auf der der Honkopf (11) exzentrisch drehbar gelagert ist, so daß eine Oszillation des Honkopfes (11) bei einer unterschiedlichen Rotation der Exzentereinrichtung (18) und des Honkopfes (11) erreicht wird.

15. Vorrichtung nach einem der vorstehenden Ansprüche, dadurch gekennzeichnet, daß eine Lagerung (23, 24) des Werkzeugkopfes insbesondere mit einer Abdeckung (40) gegen Flüssigkeit und/oder Wärme abgeschirmt ist.

16. Anlage zum Nachplanen einer Fläche (3) einer Lochplatte (1) eines Extruders insbesondere für die Granulierung von Kunststoffen, wie PP oder PE, mit:
a) einer Vorrichtung nach einem der Ansprüche 10 bis 15,
b) einer Auffangeinrichtung (60) zum Auffangen von Honöl von der Vorrichtung,
c) einer Abscheideeinrichtung (70) zum Abscheiden von Fremdstoffen im Honöl,
d) einem Honölbehälter (80) und
e) einer dem Honölbehälter nachgeschalteten Pumpe (90), die mit einem Verteilerrohr (32) am Werkzeugkopf (11) verbunden ist.
